# EUROPEAN PATENT APPLICATION

(11) **EP 4 686 239 A1**
(43) Date of publication of application: **28.01.2026**
(21) Application number: 24190881.3
(22) Date of filing: 25.07.2024
(51) Int. Cl.: H04W 8/18, H04L 67/303, H04W 8/22

(54) **ANRTICIAL INTELLIGENCE APPLICATION FOR MOBILE TERMINAL TYPE ANALYSIS AND SUBSCRIPTION PROFILE MANAGEMENT**

(71) Applicant: Giesecke+Devrient Mobile Security Germany GmbH, 81677 München (DE)
(72) Inventor: Mishra, Vivek Kumar, 122001 Gurugram (IN); Kulkarni, Ajit, 411004 Erandwane, Pune (IN); Frölund, Carl, SE-100 74 Stockholm (SE)
(74) Representative: Giesecke+Devrient IP

(57) **Abstract**

A method for managing the operation of a mobile terminal with a hosted mobile subscription profile includes using an Al-based system to analyze the type of the mobile terminal. The Al-based system allows or restricts further operation of the mobile terminal with the subscription profile based on whether the profile is dedicated to the terminal's type. The system is designed to differentiate between various types of mobile terminals, such as high-end smartphones, mid-end mobile terminals, and low-end terminals, including Internet-of-Things devices. It prevents the operation of a smartphone with an Internet-of-Things dedicated subscription profile and vice versa. The Al-based system utilizes SQL database queries to determine the mobile terminal's type by analyzing specific features like data encoding, chipset type, RAM size, display type, and browser type.

## Description

### Field of the invention

The present invention relates to The technical field of the invention is artificial intelligence applications for mobile terminal type analysis and access control.

### Background of the invention and prior art

The proliferation of mobile devices with varying capabilities, such as smartphones and Internet-of-Things (IoT) devices, has necessitated the development of systems that can distinguish between these devices for security and functionality purposes. The use of mobile subscription profiles across different types of devices can pose challenges in terms of compatibility and security, prompting the need for intelligent solutions to manage and control access to mobile services based on the device type.

### Object of the invention

It is an object of the invention to provide a method and system ensuring proper operation of profiles in devices, with reduced risk of malfunction or/and misuse.

### Summary of the invention

The object is achieved by a method and system as set out in the claims. In detail, the invention provides a method for managing operation of a mobile terminal operating with a mobile subscription profile hosted in the mobile terminal, in a mobile network, the method comprising: using an Al-based system to analyse a type of the mobile terminal. Grace to the Al-based analysing of a type of the mobile terminal, a basis is laid for ensuring that a profile matching a device type retrieved in the Al-based analysis is used in the device only.

Accordingly, a risk of malfunction and misuse is reduced.

The type of device may particularly be retrieved based on a terminal capabilities and properties database, wherein properties of devices are publicly available through either a device manufacturer or general specification bodies.

In accordance with embodiments, a method and system are provided for managing the operation of a mobile terminal with a hosted mobile subscription profile. The method involves using an Al-based system to analyze the type of the mobile terminal. The Al-based system determines whether the mobile subscription profile is dedicated to the type of the mobile terminal and permits or prevents further operation based on this analysis. The system is designed to ensure compatibility between the mobile terminal type and the subscription profile, with specific provisions for different types of mobile terminals, such as high-end smartphones, mid-end mobile terminals, low-end feature phones, or Internet-of-Things devices. The Al-based system may use SQL database queries to analyze the mobile terminal type based on features like data encoding, chipset type, RAM size, display type, and browser type. The system aims to prevent mismatches, such as operating a smartphone with an Internet-of-Things dedicated subscription profile or vice versa. A fee billed or charged for operation of the mobile terminal with the subscription profile may be maintained as is or amended, depending on if the subscription profile is dedicated to the type of mobile terminal according to a result of the analysis, or not.

### Brief description of the drawings

Embodiments of the invention will now be described with reference to the accompanying drawings, throughout which like parts are referred to by like references, and in which represents:

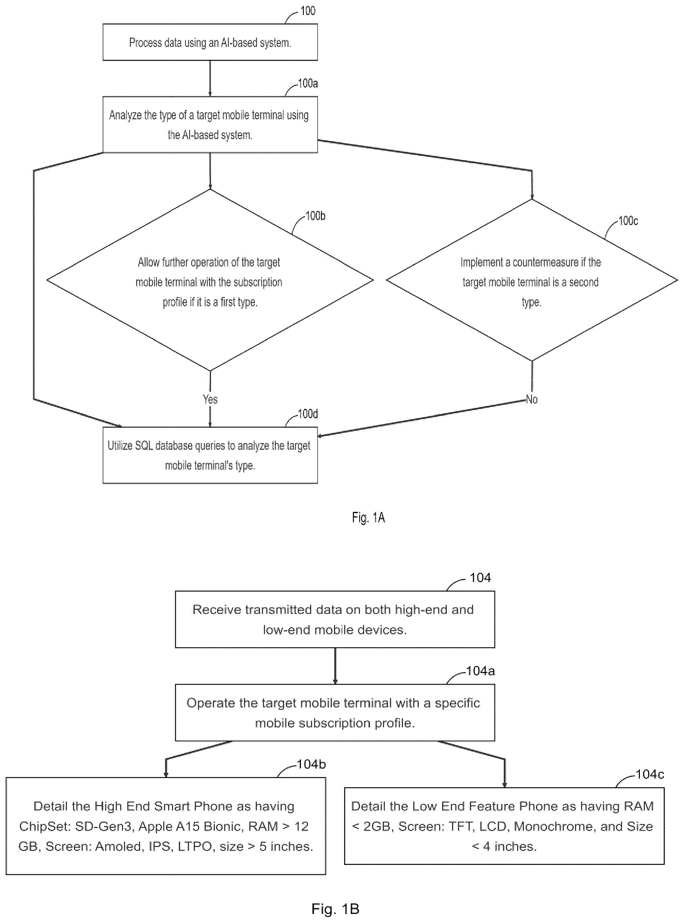

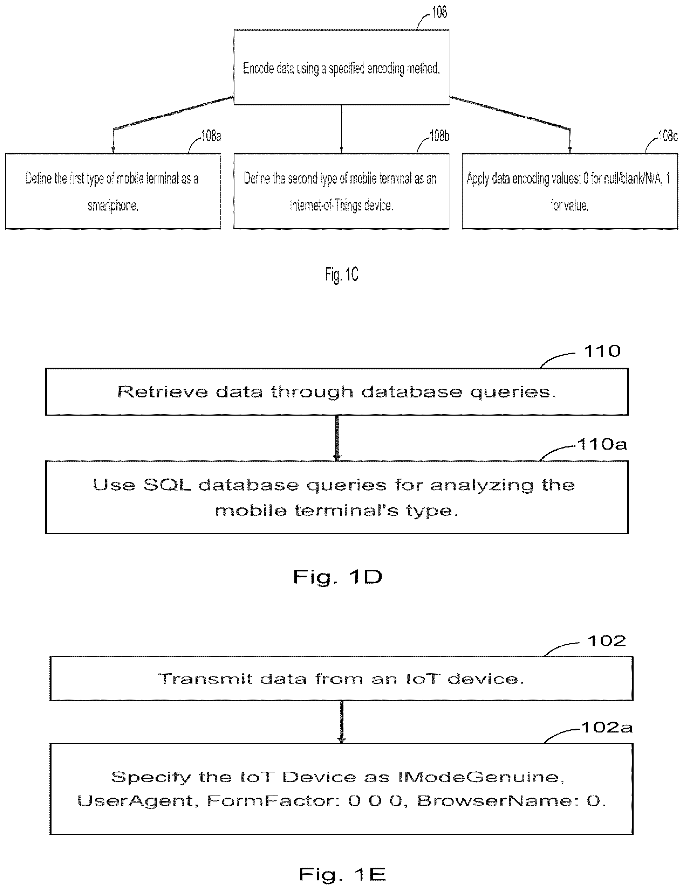

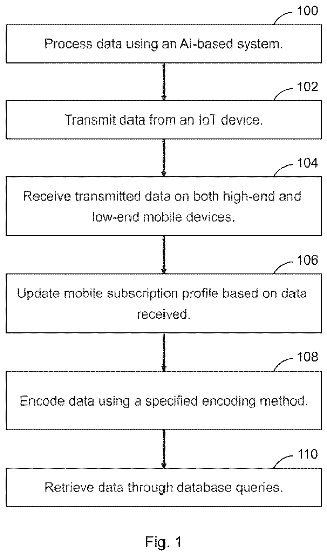

Fig. 1 outlines a workflow for processing and transmitting data using AI and loT technologies.
Fig. 1A demonstrates the AI system's decision-making process for different mobile terminal types.
Fig. 1B illustrates the differentiation and handling of high-end and low-end mobile devices.
Fig. 1C categorizes mobile terminals and outlines their data encoding scheme.
Fig. 1D details the process of retrieving data using SQL queries for mobile terminal analysis.
Fig. 1E specifies the parameters for data transmission from loT devices.

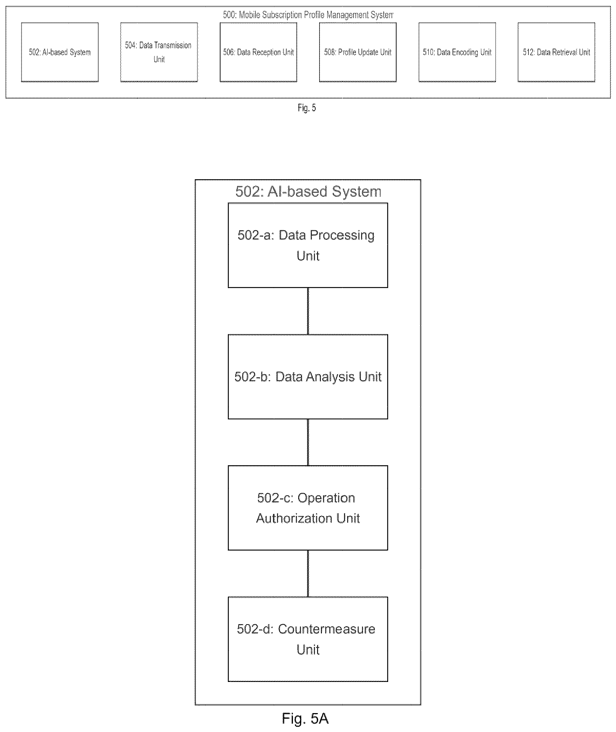

Fig. 5 outlines the components of a mobile subscription profile management system.
Fig. 5A details the internal structure and workflow of an Al-based system within the management system.

### Detailed description of the invention

In step 100, the Al-based system, referred to as the Artificial Intelligence application, is responsible for processing data. This application is configured to analyze the type of a target mobile terminal, which is operated with a target mobile subscription profile. The Al-based system permits further operation of the target mobile terminal with the target mobile subscription profile only if the type of the target mobile terminal is a first type, which is defined as a smartphone. If the type of the target mobile terminal is a second type, identified as an Internet-of-Things-device, the Al-based system takes a countermeasure. The Artificial Intelligence application uses SQL database queries to analyze the type of the target mobile terminal. In sub-step 100-a, the Al-based system analyzes the type of a target mobile terminal to determine its compatibility with the mobile subscription profile. The Al-based system is configured to process data, which is a step in managing these profiles. In sub-step 100-b, the Al-based system permits further operation of the target mobile terminal with the target mobile subscription profile only if the type of the target mobile terminal is a first type. The first type is specified as a smartphone. The purpose of identifying the first type as a smartphone is to specify a category of mobile terminals that are permitted to operate with the target mobile subscription profile. The Al-based system authorizes continued use based on this analysis, ensuring proper device-profile matching. In sub-step 100-c, the Al-based system takes a countermeasure if the type of the target mobile terminal is a second type. The second type is identified as an Internet-of-Things-device. The purpose of identifying the second type as an Internet-of-Things-device is to specify a category of mobile terminals for which a countermeasure is taken if they attempt to operate with the target mobile subscription profile. This countermeasure is a response to an undesired condition, aiming to prevent or mitigate risk. In sub-step 100-d, the Al-based system uses SQL database queries to analyze the type of the target mobile terminal. The purpose of using SQL database queries is to enable the Artificial Intelligence application to analyze the type of the target mobile terminal. The Al-based system, or Artificial Intelligence application, is configured to process data, which is a step in managing mobile subscription profiles. The Al-based system analyzes the type of a target mobile terminal to determine compatibility or necessary actions for the mobile subscription profile. The Al-based system permits operation of the target mobile terminal with the mobile subscription profile, conditional on the terminal being of a specific type, ensuring proper device-profile matching. If the target mobile terminal is of an incompatible type, the Al-based system takes countermeasures for security or compatibility reasons. The Al-based system uses SQL database queries to analyze the type of the target mobile terminal, which is for managing the mobile subscription profile based on device type.

In step 100-a, the Al-based system, referred to as the Artificial Intelligence application, is tasked with analyzing the type of a target mobile terminal. The Al-based system is configured to process data, which is a step in managing mobile subscription profiles. The purpose of the Artificial Intelligence application is to analyze the type of a target mobile terminal and to control its operation based on the type identified, either allowing continued operation or taking a countermeasure. The Al-based system uses SQL database queries to perform this analysis. The purpose of using SQL database queries is to enable the Artificial Intelligence application to analyze the type of the target mobile terminal. The input for the SQL query includes various data points such as Encoding, loT Device, High End Smart Phone, and Low End Feature Phone. Specifically, the data encoding is defined as 0 - null, blank, N/A, and 1 - value. The loT Device attributes include IModeGenuine, UserAgent, FormFactor: 000, and BrowserName: 0. For the High End Smart Phone, the attributes are ChipSet: SD-Gen3, Apple A15 Bionic, RAM > 12 GB, and Screen: Amoled, IPS, LTPO, size > 5 inches. For the Low End Feature Phone, the attributes are RAM 2GB, Screen: TFT, LCD, Monochrome, and Size 4 inches. The Al-based system's analysis determines whether the target mobile terminal is a first type or a second type. The first type is identified as a smartphone, which is characterized by high-end hardware and display features such as a ChipSet: SD-Gen3, Apple A15 Bionic, RAM > 12 GB, and Screen: Amoled, IPS, LTPO, size > 5 inches. The second type is identified as an Internet-of-Things-device, which may require countermeasures if it attempts to operate with the target mobile subscription profile. The attributes for the loT Device include IModeGenuine, UserAgent, FormFactor: 000, and BrowserName: 0. In summary, step 100-a involves the Al-based system analyzing the type of a target mobile terminal using SQL database queries. The analysis is based on specific attributes of the mobile terminal, which are for determining its compatibility with the target mobile subscription profile. The Al-based system's purpose is to ensure proper device-profile matching by either allowing continued operation or taking a countermeasure based on the type of the mobile terminal.

In step 100-b, the Al-based system, referred to as the Artificial Intelligence application, permits further operation of the target mobile terminal with the target mobile subscription profile only if the type of the target mobile terminal is a first type. The first type is identified as a smartphone. The purpose of the Artificial Intelligence application is to analyze the type of a target mobile terminal and to control its operation based on the type identified, either allowing continued operation or taking a countermeasure. The Artificial Intelligence application is configured to process data, which is a step in managing mobile subscription profiles. It analyses the type of a target mobile terminal to determine compatibility with the mobile subscription profile. The Al-based system is purposed to permit operation of the target mobile terminal with the mobile subscription profile, conditional on the terminal being of a specific type, ensuring proper device-profile matching. The first type, identified as a smartphone, is defined by specific attributes such as ChipSet: SD-Gen3, Apple A15 Bionic, RAM > 12 GB, and Screen: Amoled, IPS, LTPO, size > 5 inches. These attributes specify the high-end hardware and display characteristics of a smartphone, which may influence the management of its mobile subscription profile. The purpose of identifying the first type as a smartphone is to specify a category of mobile terminals that are permitted to operate with the target mobile subscription profile. The Artificial Intelligence application uses SQL database queries to analyze the type of the target mobile terminal. The input for the SQL query includes data, encoding, loT Device, High End Smart Phone, and Low End Feature Phone. The data encoding is specified as 0 - null, blank, N/A, and 1 - value. The purpose of these inputs is to provide the necessary data for the SQL query to analyze the type of the target mobile terminal. In summary, step 100-b involves the Al-based system permitting further operation of the target mobile terminal with the target mobile subscription profile only if the terminal is identified as a first type, which is a smartphone. The system uses specific attributes and SQL database queries to ensure proper device-profile matching and management of mobile subscription profiles.

In step 100-c, the Al-based system, referred to as the Artificial Intelligence application, takes a countermeasure if the type of the target mobile terminal is a second type. The second type is identified as an Internet-of-Things-device (IoT device). The purpose of the Al-based system taking a countermeasure is to prevent or mitigate risk associated with the operation of the target mobile terminal when it is identified as an loT device. The Al-based system, configured to process data, is purposed to analyze the type of a target mobile terminal to determine compatibility or necessary actions for the mobile subscription profile. Specifically, the Al-based system uses SQL database queries to analyze the type of the target mobile terminal. The input for the SQL query includes data, encoding, loT device, high-end smart phone, and low-end feature phone. The data encoding is specified as 0 - null, blank, N/A, and 1 - value. The loT device attributes include IModeGenuine, UserAgent, FormFactor: 000, and BrowserName: 0. The Al-based system's countermeasure action is triggered when the target mobile terminal is identified as an loT device. This identification is based on specific attributes such as the loT device's configuration or state, which are relevant for managing mobile subscription profiles. The purpose of identifying the second type as an loT device is to specify a category of mobile terminals for which a countermeasure is taken if they attempt to operate with the target mobile subscription profile. In summary, step 100-c involves the Al-based system taking a countermeasure to prevent or mitigate risk when the target mobile terminal is identified as an loT device. This action is part of the broader method for managing mobile subscription profiles, ensuring that only compatible devices are permitted to operate with the target mobile subscription profile. The Al-based system's analysis and countermeasure actions are supported by SQL database queries and specific data inputs, including encoding and device attributes.

In step 100-d, the Al-based system uses SQL database queries to analyze the type of the target mobile terminal. The Al-based system, referred to as the Artificial Intelligence application, is configured to process data, which is a step in managing mobile subscription profiles. The purpose of the Artificial Intelligence application is to analyze the type of a target mobile terminal and to control its operation based on the type identified, either allowing continued operation or taking a countermeasure. The Al-based system analyses the type of the target mobile terminal to determine compatibility or necessary actions for the mobile subscription profile. The SQL database queries are used to retrieve data, allowing for the analysis and management of mobile subscription profiles. The purpose of using SQL database queries is to enable the Artificial Intelligence application to analyze the type of the target mobile terminal. The input for the SQL query includes data, encoding, loT Device, High End Smart Phone, and Low End Feature Phone. The data encoding is specified as 0 - null, blank, N/A, and 1 - value. The loT Device is defined with attributes such as IModeGenuine, UserAgent, FormFactor: 0 0 0, and BrowserName: 0. The High End Smart Phone is characterized by attributes including ChipSet: SD-Gen3, Apple A15 Bionic, RAM > 12 GB, and Screen: Amoled, IPS, LTPO, size > 5 inches. The Low End Feature Phone is characterized by attributes such as RAM 2GB, Screen: TFT, LCD, Monochrome, and Size 4 inches. The Al-based system, through the use of SQL database queries, performs data analysis to determine the type of the target mobile terminal. The Artificial Intelligence application ensures that the target mobile terminal is operated with a target mobile subscription profile, permitting further operation only if the type of the target mobile terminal is a first type, which is a smartphone. If the type of the target mobile terminal is a second type, which is an Internet-of-Things-device, the Al-based system takes a countermeasure to prevent or mitigate risk. This approach ensures that the mobile subscription profiles are managed, maintaining compatibility and security across different types of mobile terminals.

In step 102, the process involves sending data from an loT device. The loT device is configured to send data as part of the method for managing mobile subscription profiles. The purpose of the loT device is to provide input for SQL queries to facilitate data analysis. Specifically, the loT device is characterized by attributes such as IModeGenuine, UserAgent, FormFactor: 000, and BrowserName: 0. These attributes define specific configurations or states for the loT device, which are relevant for the management of mobile subscription profiles. The data sent from the loT device is encoded using a data encoding method. The encoding method standardizes the representation of data states, facilitating processing and interpretation. The specific data encoding used is 0 - null, blank, N/A, and 1 - value. This encoding ensures that the data is prepared for processing or transmission, maintaining data integrity and security. The loT device, along with the data encoding, provides the necessary data for the SQL query to analyze the type of the target mobile terminal. The input for the SQL query includes data, encoding, loT device, high-end smartphone, and low-end feature phone. This input set allows the Artificial Intelligence application to analyze the type of the target mobile terminal, determining compatibility with the mobile subscription profile and taking appropriate actions based on the type identified. In summary, step 102 involves the loT device sending data, which is encoded using a data encoding method. This data is then used as input for SQL queries to analyze the type of the target mobile terminal, ensuring management of mobile subscription profiles.

In step 102-a, the loT Device is described with specific attributes that are for its role in the system. The loT Device is configured to send data, which is for the method of managing mobile subscription profiles. The specific attributes of the loT Device include IModeGenuine, UserAgent, FormFactor: 0 0 0, and BrowserName: 0. These attributes define specific configurations or states for the loT device, which are relevant for the management of mobile subscription profiles. The purpose of these inputs is to provide the necessary data for the SQL query to analyze the type of the target mobile terminal. The data encoding method is also involved, with encoding values specified as 0 - null, blank, N/A, and 1 - value. This encoding standardizes the representation of data states, facilitating processing and interpretation. The loT Device, along with the data encoding method, provides input for the SQL query, which is used by the Artificial Intelligence application to analyze the type of the target mobile terminal. The Artificial Intelligence application is purposed to analyze the type of a target mobile terminal and to control its operation based on the type identified, either allowing continued operation or taking a countermeasure. The loT Device's role in sending data and providing input for the SQL query is fundamental to the overall process of managing mobile subscription profiles. The specific configurations and states of the loT Device, as well as the standardized data encoding, ensure that the data sent is processed and analyzed by the Artificial Intelligence application. This approach ensures that the system can manage mobile subscription profiles by identifying and responding to different types of mobile terminals.

In step 104, the process involves receiving the sent data on a high-end mobile device and a low-end mobile device. This step is for obtaining information necessary for updating the mobile subscription profile. The high-end mobile device, referred to as the High End Smart Phone, and the low-end mobile device, referred to as the Low End Feature Phone, are both configured to receive data, which is for the subsequent steps in managing mobile subscription profiles. Sub-step 104-a specifies that the target mobile terminal is operated with a target mobile subscription profile. This means that the mobile devices, whether high-end or low-end, are functioning within a specified configuration that is central to the method and system for managing mobile subscription profiles. The Artificial Intelligence application analyses the type of a target mobile terminal which is operated with a target mobile subscription profile, and permits further operation of the target mobile terminal with the target mobile subscription profile only if the type of the target mobile terminal is a first type, and takes a countermeasure if the type of the target mobile terminal is a second type. Sub-step 104-b details the attributes of the High End Smart Phone, which include ChipSet: SD-Gen3, Apple A15 Bionic, RAM > 12 GB, and Screen: Amoled, IPS, LTPO, size > 5 inches. These attributes specify the high-end hardware and display characteristics of a smartphone, which may influence the management of its mobile subscription profile. The purpose of these specific attributes is to define the characteristics of different types of mobile terminals, such as High End Smart Phones, which are used by the Artificial Intelligence application to determine the type of the target mobile terminal. Sub-step 104-c outlines the attributes of the Low End Feature Phone, which include RAM 2GB, Screen: TFT, LCD, Monochrome and Size 4 inches. These attributes specify the lower-end hardware and display characteristics of a feature phone, which may influence the management of its mobile subscription profile. The purpose of these specific attributes is to define the characteristics of different types of mobile terminals, such as Low End Feature Phones, which are used by the Artificial Intelligence application to determine the type of the target mobile terminal. The Artificial Intelligence application uses SQL database queries to analyse the type of the target mobile terminal. The input for the SQL query includes data from the loT Device, Encoding, Data, High End Smart Phone, and Low End Feature Phone. The encoding method standardizes the representation of data states, facilitating processing and interpretation. The specific data encoding is 0 - null, blank, N/A, 1 - value. The loT Device attributes include IModeGenuine, UserAgent, FormFactor: 0 0 0, and BrowserName: 0. In summary, step 104 involves receiving data on both high-end and low-end mobile devices, which are then analyzed by the Artificial Intelligence application to determine the type of the target mobile terminal. This analysis is for managing the mobile subscription profile, ensuring that the devices operate within their specified configurations, and taking necessary countermeasures if required.

In step 104-a, the target mobile terminal is operated with a target mobile subscription profile. The Artificial Intelligence application analyses the type of the target mobile terminal to determine its compatibility with the mobile subscription profile. The purpose of the Artificial Intelligence application is to analyze the type of a target mobile terminal and to control its operation based on the type identified, either allowing continued operation or taking a countermeasure. The Al-based system is configured to process data, which is a step in managing mobile subscription profiles. The Al-based system analyses the type of the target mobile terminal to determine compatibility or necessary actions for the mobile subscription profile. The target mobile terminal is purposed to be operated with a specific mobile subscription profile, which is central to the method and system for managing mobile subscription profiles. The Artificial Intelligence application uses SQL database queries to analyze the type of the target mobile terminal. The purpose of using SQL database queries is to enable the Artificial Intelligence application to analyze the type of the target mobile terminal. The input for the SQL query includes data, encoding, loT Device, High End Smart Phone, and Low End Feature Phone. The encoding is specified as 0 - null, blank, N/A, and 1 - value. The loT Device attributes include IModeGenuine, UserAgent, FormFactor: 000, and BrowserName: 0. The High End Smart Phone attributes include ChipSet: SD-Gen3, Apple A15 Bionic, RAM > 12 GB, and Screen: Amoled, IPS, LTPO, size > 5 inches. The Low End Feature Phone attributes include RAM 2GB, Screen: TFT, LCD, Monochrome, and Size 4 inches. These specific attributes define the characteristics of different types of mobile terminals, which are used by the Artificial Intelligence application to determine the type of the target mobile terminal.

In step 104-b, the focus is on the high-end mobile device, specifically the High End Smart Phone. The High End Smart Phone is characterized by several high-end hardware and display attributes. These attributes include a ChipSet: SD-Gen3, Apple A15 Bionic, RAM greater than 12 GB, and a Screenthat is Amoled, IPS, LTPO, with a size greater than 5 inches. These specifications define the high-performance capabilities and advanced display technologies of the High End Smart Phone, making it suitable for complex tasks and high-quality visual outputs. The High End Smart Phone, as part of the system for managing mobile subscription profiles, is configured to receive data sent from an loT device. This data reception is for updating the mobile subscription profile based on the received information. The Al-based system, or Artificial Intelligence application, processes this data to analyze the type of the target mobile terminal. If the target mobile terminal is identified as a High End Smart Phone, the Al-based system permits further operation of the terminal with the target mobile subscription profile. This permission is granted because the High End Smart Phone meets the hardware and performance criteria, ensuring compatibility and optimal performance with the subscription profile. The Al-based system uses SQL database queries to analyze the type of the target mobile terminal. The input for these SQL queries includes data from the High End Smart Phone, which is encoded using a data encoding method. The encoding method standardizes the data representation, with 0 representing null, blank, or N/A, and 1 representing a value. This standardized encoding facilitates data analysis and interpretation by the Al-based system. In summary, step 104-b involves the High End Smart Phone receiving data, which is then analyzed by the Al-based system using SQL database queries. The system permits further operation of the High End Smart Phone with the target mobile subscription profile based on its specifications, ensuring compatibility and optimal performance. The data encoding method plays a role in standardizing the data for analysis.

In step 104-c, the focus is on the Low End Feature Phone, which is defined by specific hardware and display characteristics. The Low End Feature Phone is described as having RAM less than 2GB and a screen that is TFT, LCD, Monochrome, and less than 4 inches in size. These attributes specify the lower-end hardware and display characteristics of a feature phone, which may influence the management of its mobile subscription profile. The Low End Feature Phone is configured to receive data, which is for updating the mobile subscription profile. This device provides input for the SQL query to facilitate data analysis. The purpose of these inputs is to provide the necessary data for the SQL query to analyze the type of the target mobile terminal. The input for the SQL query includes data, encoding, loT Device, High End Smart Phone, and Low End Feature Phone. The Artificial Intelligence application uses SQL database queries to analyze the type of the target mobile terminal. The purpose of using SQL database queries is to enable the Artificial Intelligence application to analyze the type of the target mobile terminal. The Artificial Intelligence application is purposed to analyze the type of a target mobile terminal to determine compatibility or necessary actions for the mobile subscription profile. It permits further operation of the target mobile terminal with the target mobile subscription profile only if the type of the target mobile terminal is a first type, and takes a countermeasure if the type of the target mobile terminal is a second type. In summary, the Low End Feature Phone, with its specified attributes, plays a role in the data analysis process for managing mobile subscription profiles. The Artificial Intelligence application leverages SQL database queries to determine the type of the target mobile terminal and take appropriate actions based on the analysis.

In step 106, the process involves updating a mobile subscription profile based on the received data. The Artificial Intelligence application is responsible for analyzing the type of a target mobile terminal and controlling its operation based on the type identified, either allowing continued operation or taking a countermeasure. This analysis is for determining the compatibility of the mobile terminal with the mobile subscription profile. The Artificial Intelligence application is configured to process data, which is a step in managing mobile subscription profiles. It uses SQL database queries to analyze the type of the target mobile terminal. The input for the SQL query includes data, encoding, loT Device, High End Smart Phone, and Low End Feature Phone. The encoding is specified as 0 - null, blank, N/A, and 1 - value. The loT Device attributes include IModeGenuine, UserAgent, FormFactor: 0 0 0, and BrowserName: 0. The High End Smart Phone attributes include ChipSet: SD-Gen3, Apple A15 Bionic, RAM > 12 GB, and Screen: Amoled, IPS, LTPO, size > 5 inches. The Low End Feature Phone attributes include RAM 2GB, and Screen: TFT, LCD, Monochrome, and Size 4 inches. The Artificial Intelligence application analyses the type of a target mobile terminal which is operated with a target mobile subscription profile. It permits further operation of the target mobile terminal with the target mobile subscription profile only if the type of the target mobile terminal is a first type, which is a smartphone. If the type of the target mobile terminal is a second type, which is an Internet-of-Things-device, the application takes a countermeasure. This ensures that only compatible devices are allowed to operate with the mobile subscription profile, maintaining the integrity and security of the system.

In step 108, the process involves encoding the data using a data encoding method. The data encoding method is for preparing data for processing or transmission, ensuring data integrity and security in the management of mobile subscription profiles. The specific data encoding used is 0 - null, blank, N/A, 1- value. This standardization of data states facilitates processing and interpretation, making it easier for the system to handle and analyze the data. The data encoding method provides input for the SQL query, which is used by the Artificial Intelligence application to analyze the type of the target mobile terminal. The input for the SQL query includes various elements such as Data, Encoding, loT Device, High End Smart Phone, and Low End Feature Phone. Each of these inputs plays a role in the data analysis process. The loT Device is characterized by attributes such as IModeGenuine, UserAgent, FormFactor: 0 0 0, and BrowserName: 0. These configurations or states are relevant for managing mobile subscription profiles, ensuring that the data sent from the loT device is represented and processed. The High End Smart Phone is defined by high-end hardware and display characteristics, including ChipSet: SD-Gen3, Apple A15 Bionic, RAM > 12 GB, and Screen: Amoled, IPS, LTPO, size > 5 inches. These attributes influence the management of its mobile subscription profile, ensuring that the device's capabilities are taken into account during the data analysis process. Similarly, the Low End Feature Phone is characterized by lower-end hardware and display attributes, such as RAM 2GB, Screen: TFT, LCD, Monochrome, and Size 4 inches. These specifications are for understanding the device's limitations and ensuring that the mobile subscription profile is managed accordingly. Overall, the data encoding method and the specific attributes of the loT Device, High End Smart Phone, and Low End Feature Phone are integral to the process of managing mobile subscription profiles. The Artificial Intelligence application uses these inputs to analyze the type of the target mobile terminal, ensuring that the system can manage and update mobile subscription profiles based on the received data.

In step 108-a, the focus is on identifying the first type of target mobile terminal, which is a smartphone. The Al-based system, referred to as the Artificial Intelligence application, is responsible for analyzing the type of the target mobile terminal. This analysis is for determining the compatibility of the mobile terminal with the mobile subscription profile. The Al-based system is configured to process data, which is a step in managing mobile subscription profiles. The purpose of the Artificial Intelligence application is to analyze the type of a target mobile terminal and to control its operation based on the type identified, either allowing continued operation or taking a countermeasure. The first type, identified as a smartphone, is defined by specific attributes. These attributes include a high-end hardware and display configuration: ChipSet: SD-Gen3, Apple A15 Bionic, RAM greater than 12 GB, and Screen: Amoled, IPS, LTPO, size greater than 5 inches. These characteristics are for the Al-based system to categorize the device type. The purpose of identifying the first type as a smartphone is to specify a category of mobile terminals that are permitted to operate with the target mobile subscription profile. The Al-based system permits further operation of the target mobile terminal with the target mobile subscription profile only if the type of the target mobile terminal is a first type. This ensures that only compatible devices, such as smartphones with the specified high-end attributes, are allowed to continue operating with the mobile subscription profile. This step is for maintaining the integrity and security of the mobile subscription profile management system.

In sub-step 108-b, the focus is on identifying the second type of target mobile terminal, which is an Internet-of-Things-device (IoT device). The Al-based system, referred to as the Artificial Intelligence application, is responsible for analyzing the type of the target mobile terminal. If the target mobile terminal is identified as the second type, which is an loT device, the system takes a countermeasure to prevent or mitigate any potential risks associated with its operation. The Artificial Intelligence application uses SQL database queries to analyze the type of the target mobile terminal. The input for the SQL query includes data encoding, which is specified as 0 - null, blank, N/A, and 1 - value. The loT device is characterized by specific attributes such as IModeGenuine, UserAgent, FormFactor: 0 0 0, and BrowserName: 0. These attributes define the specific configurations or states for the loT device, which are relevant for the management of mobile subscription profiles. The purpose of identifying the second type as an Internet-of-Things-device is to specify a category of mobile terminals for which a countermeasure is taken if they attempt to operate with the target mobile subscription profile. The Al-based system, or Artificial Intelligence application, is purposed to take countermeasures for security or compatibility reasons if the target mobile terminal is of an incompatible type. This ensures that only compatible devices are allowed to operate with the mobile subscription profile, thereby maintaining the integrity and security of the system. In summary, sub-step 108-b involves the identification of the second type of target mobile terminal as an Internet-of-Things-device and the subsequent countermeasures taken by the Al-based system to prevent or mitigate risks associated with its operation. The system uses SQL database queries to analyze the type of the target mobile terminal, with specific attributes and data encoding methods providing the necessary input for this analysis.

In step 108-c, the data encoding is specified as 0 - null, blank, N/A, 1 - value. This step involves the use of a data encoding method to standardize the representation of data states, facilitating processing and interpretation. The data encoding method is for ensuring data integrity and security in the management of mobile subscription profiles. The specific attributes for the data encoding method include encoding values such as 0 for null, blank, or N/A, and 1 for value. This encoding scheme is for the SQL query input, which is used by the Artificial Intelligence application to analyze the type of the target mobile terminal. The Artificial Intelligence application, which is configured to process data, plays a role in this step. It uses SQL database queries to analyze the type of the target mobile terminal, determining whether it is a first type (smartphone) or a second type (Internet-of-Things-device). The Al-based system permits further operation of the target mobile terminal with the target mobile subscription profile only if the type of the target mobile terminal is a first type. If the type of the target mobile terminal is a second type, the Al-based system takes a countermeasure to prevent or mitigate risk. The input for the SQL query includes data from various sources such as the loT Device, High End Smart Phone, and Low End Feature Phone. The loT Device is characterized by attributes like IModeGenuine, UserAgent, FormFactor: 000, and BrowserName: 0. The High End Smart Phone has attributes such as ChipSet: SD-Gen3, Apple A15 Bionic, RAM > 12 GB, and Screen: Amoled, IPS, LTPO, size > 5 inches. The Low End Feature Phone is defined by attributes like RAM 2GB, Screen: TFT, LCD, Monochrome, and Size 4 inches. These inputs are for the Al-based system to analyze the type of the target mobile terminal and make informed decisions regarding its operation with the mobile subscription profile. The data encoding method ensures that the data is in a standardized format, making it easier for the Al-based system to process and analyze the information.

In step 110, the process involves retrieving data using database queries. The database queries are correlated with the Artificial Intelligence application. The purpose of the database queries is to access stored information, which is for managing mobile subscription profiles. Specifically, the Artificial Intelligence application uses SQL database queries to analyze the type of the target mobile terminal. This analysis is for determining the compatibility of the mobile terminal with the mobile subscription profile. The SQL database queries are used to analyze the type of the target mobile terminal, which is a function of the Artificial Intelligence application. The input for the SQL query includes various data points such as Encoding, loT Device, High End Smart Phone, and Low End Feature Phone. The encoding data is specified as 0 - null, blank, N/A, and 1 - value. The loT Device attributes include IModeGenuine, UserAgent, FormFactor: 0 0 0, and BrowserName: 0. The High End Smart Phone attributes are ChipSet: SD-Gen3, Apple A15 Bionic, RAM > 12 GB, and Screen: Amoled, IPS, LTPO, size > 5 inches. The Low End Feature Phone attributes are RAM 2GB, Screen: TFT, LCD, Monochrome, and Size 4 inches. The Artificial Intelligence application is designed to analyze the type of a target mobile terminal, which is operated with a target mobile subscription profile. It permits further operation of the target mobile terminal with the target mobile subscription profile only if the type of the target mobile terminal is a first type, which is a smartphone. If the type of the target mobile terminal is a second type, which is an Internet-of-Things-device, the application takes a countermeasure. The purpose of using SQL database queries is to enable the Artificial Intelligence application to analyze the type of the target mobile terminal, ensuring management of mobile subscription profiles based on the type of device.

In step 110-a, the process involves using SQL database queries to analyze the type of the target mobile terminal. The Artificial Intelligence application is central to this step, as it utilizes SQL database queries to determine the type of the target mobile terminal. This analysis is for managing mobile subscription profiles. The Artificial Intelligence application is designed to analyze the type of a target mobile terminal, which is operated with a target mobile subscription profile. It permits further operation of the target mobile terminal with the target mobile subscription profile only if the type of the target mobile terminal is a first type, and takes a countermeasure if the type of the target mobile terminal is a second type. The first type is identified as a smartphone, while the second type is an Internet-of-Things-device. The purpose of using SQL database queries is to enable the Artificial Intelligence application to analyze the type of the target mobile terminal. The specific attributes and configurations of the devices involved are for this analysis. For instance, the high-end smartphone is characterized by attributes such as ChipSet: SD-Gen3, Apple A15 Bionic, RAM > 12 GB, and Screen: Amoled, IPS, LTPO, size > 5 inches. On the other hand, the low-end feature phone is defined by attributes like RAM 2GB, Screen: TFT, LCD, Monochrome, and Size 4 inches. These attributes help the Artificial Intelligence application categorize the devices. Additionally, the data encoding method plays a role in this process. The encoding is specified as 0 - null, blank, N/A, 1 - value, which standardizes the representation of data states, facilitating processing and interpretation. The loT device is also defined with specific configurations such as IModeGenuine, UserAgent, FormFactor: 000, and BrowserName: 0, which are relevant for the management of mobile subscription profiles. In summary, step 110-a involves the Artificial Intelligence application using SQL database queries to analyze the type of the target mobile terminal. This analysis is based on specific attributes and configurations of the devices, ensuring categorization and management of mobile subscription profiles.

The Mobile Subscription Profile Management System (system/component number 500) is a system designed to manage mobile subscription profiles by integrating various components and sub-components. This system includes an Al-based system, an loT device, high-end and low-end mobile devices, a mobile subscription profile, a data encoding method, and database queries. The Al-based system (component number 502) is central to this management system. It processes data and performs analysis to manage mobile subscription profiles. Specifically, the Al-based system analyses the type of a target mobile terminal to determine compatibility with the mobile subscription profile. The Al-based system is configured to process data, which is a step in managing mobile subscription profiles. The Al-based system uses SQL database queries to analyze the type of the target mobile terminal, which is for managing the mobile subscription profile based on device type. The Al-based system permits further operation of the target mobile terminal with the target mobile subscription profile only if the type of the target mobile terminal is a first type (smartphone) and takes a countermeasure if the type of the target mobile terminal is a second type (Internet-of-Things-device). The loT device (component number 504) is configured to send data as part of the method for managing mobile subscription profiles. The loT device provides input for SQL queries to facilitate data analysis. The specific attributes of the loT device include IModeGenuine, UserAgent, FormFactor: 000, and BrowserName: 0. These attributes define specific configurations or states for the loT device, which are relevant for the management of mobile subscription profiles. The high-end mobile device and low-end mobile device (component number 506) are configured to receive the sent data, which is for updating the mobile subscription profile. The high-end mobile device, identified as a High End Smart Phone, has specific attributes such as ChipSet: SD-Gen3, Apple A15 Bionic, RAM > 12 GB, and Screen: Amoled, IPS, LTPO, size > 5 inches. These attributes specify the high-end hardware and display characteristics of a smartphone, which may influence the management of its mobile subscription profile. The low-end mobile device, identified as a Low End Feature Phone, has attributes such as RAM 2GB, Screen: TFT, LCD, Monochrome, and Size 4 inches. These attributes specify the lower-end hardware and display characteristics of a feature phone, which may influence the management of its mobile subscription profile. The mobile subscription profile (component number 508) is configured to be updated based on the received data to ensure it remains current and accurate. The Al-based system analyses the type of a target mobile terminal, which is operated with a target mobile subscription profile, and permits further operation of the target mobile terminal with the target mobile subscription profile only if the type of the target mobile terminal is a first type, and takes a countermeasure if the type of the target mobile terminal is a second type. The data encoding method (component number 510) is configured to encode data, which is a step for data integrity and security in the management of mobile subscription profiles. The encoding method includes specific data encoding such as 0 - null, blank, N/A, and 1 - value. The purpose of this specific data encoding is to standardize the representation of data states, facilitating processing and interpretation. Finally, the database queries (component number 512) are configured to retrieve data, allowing for the analysis and management of mobile subscription profiles. The Al-based system uses SQL database queries to analyze the type of the target mobile terminal. In summary, the Mobile Subscription Profile Management System integrates various components to manage mobile subscription profiles. The Al-based system processes and analyzes data, the loT device sends data, high-end and low-end mobile devices receive data, the mobile subscription profile is updated based on received data, the data encoding method ensures data integrity, and database queries retrieve data for analysis. The system ensures that only compatible devices (first type: smartphones) are permitted to operate with the mobile subscription profile, while countermeasures are taken for incompatible devices (second type: Internet-of-Things-devices).

The Al-based System, identified as component number 502, is a part of the Mobile Subscription Profile Management System. This system is designed to process data and perform analysis to manage mobile subscription profiles. The Al-based system, also referred to as the Artificial Intelligence application, is configured to process data, which is a step in managing mobile subscription profiles. The purpose of the Artificial Intelligence application is to analyze the type of a target mobile terminal and to control its operation based on the type identified, either allowing continued operation or taking a countermeasure. The Al-based system comprises several sub-components, each with specific roles: 1. Data Processing Unit (502-a): This unit is responsible for processing data, which is for managing mobile subscription profiles. The Al-based system processes data to manage mobile subscription profiles. 2. Data Analysis Unit (502-b): This unit analyzes the type of the target mobile terminal to determine compatibility with mobile subscription profiles. The Artificial Intelligence application analyses a type of a target mobile terminal which is operated with a target mobile subscription profile. It uses SQL database queries to analyze the type of the target mobile terminal. The input for the SQL query includes data, encoding, loT Device, High End Smart Phone, and Low End Feature Phone. The encoding is specified as 0 - null, blank, N/A, and 1 - value. The loT Device attributes include IModeGenuine, UserAgent, FormFactor: 000, and BrowserName: 0. The High End Smart Phone attributes include ChipSet: SD-Gen3, Apple A15 Bionic, RAM > 12 GB, and Screen: Amoled, IPS, LTPO, size > 5 inches. The Low End Feature Phone attributes include RAM 2GB, and Screen: TFT, LCD, Monochrome, and Size 4 inches. 3. Operation Authorization Unit (502-c): This unit authorizes the operation of the target mobile terminal if it is a first type, which is defined as a smartphone. The Al-based system permits further operation of the target mobile terminal with the target mobile subscription profile only if the type of the target mobile terminal is a first type. The first type is a smartphone. 4. Countermeasure Unit (502-d): This unit takes countermeasures if the target mobile terminal is a second type, which is defined as an Internet-of-Things-device. The Al-based system takes a countermeasure if the type of the target mobile terminal is a second type. The second type is an Internet-of-Things-device. The Al-based system uses SQL database queries to analyze the type of the target mobile terminal, which is for managing the mobile subscription profile based on device type. The purpose of using SQL database queries is to enable the Artificial Intelligence application to analyze the type of the target mobile terminal. The Al-based system is purposed to analyze the type of a target mobile terminal to determine compatibility or necessary actions for the mobile subscription profile. The Al-based system is purposed to permit operation of the target mobile terminal with the mobile subscription profile, conditional on the terminal being of a specific type, ensuring proper device-profile matching. The Al-based system is also purposed to take countermeasures for security or compatibility reasons if the target mobile terminal is of an incompatible type. In summary, the Al-based System (component 502) is a sophisticated and integral part of the Mobile Subscription Profile Management System, designed to process and analyze data to manage mobile subscription profiles. It ensures that only compatible devices, such as smartphones, are permitted to operate with the subscription profiles, while taking necessary countermeasures for incompatible devices, such as loT devices. The system leverages SQL database queries and specific data encoding methods to facilitate accurate and efficient analysis and management of mobile subscription profiles.

The Data Processing Unit, identified as sub-component 502-a, is an integral part of the Al-based System (component 502) within the Mobile Subscription Profile Management System. This unit is responsible for processing data, which is a step in managing mobile subscription profiles. The Al-based system, also referred to as the Artificial Intelligence application, is configured to process data and perform analysis to manage mobile subscription profiles. Specifically, the Al-based system analyses the type of a target mobile terminal to determine compatibility with the mobile subscription profile. The Artificial Intelligence application analyses a type of a target mobile terminal which is operated with a target mobile subscription profile. It permits further operation of the target mobile terminal with the target mobile subscription profile only if the type of the target mobile terminal is a first type, and takes a countermeasure if the type of the target mobile terminal is a second type. The first type is identified as a smartphone, while the second type is identified as an Internet-of-Things-device. The Al-based system uses SQL database queries to analyze the type of the target mobile terminal. The input for the SQL query includes data, encoding, loT Device, High End Smart Phone, and Low End Feature Phone. The data encoding method is specified as 0 - null, blank, N/A, and 1 - value. The loT Device attributes include IModeGenuine, UserAgent, FormFactor: 000, and BrowserName: 0. The High End Smart Phone is characterized by a ChipSet: SD-Gen3, Apple A15 Bionic, RAM > 12 GB, and Screen: Amoled, IPS, LTPO, size > 5 inches. In contrast, the Low End Feature Phone is characterized by RAM 2GB, Screen: TFT, LCD, Monochrome, and Size 4 inches. The Al-based system's purpose is to analyze the type of a target mobile terminal and control its operation based on the type identified, either allowing continued operation or taking a countermeasure. This ensures that the mobile subscription profile is managed, maintaining compatibility and security across different types of mobile terminals. The Data Processing Unit (502-a) plays a role in this process by handling the initial data processing required for subsequent analysis and decision-making by the Al-based system.

The Data Analysis Unit, identified as system/component number 502-b, is a sub-component of the Al-based System (502) within the Mobile Subscription Profile Management System (500). This unit is designed to analyze the type of target mobile terminal to determine its compatibility with mobile subscription profiles. The primary entity associated with the Data Analysis Unit is the Al-based system, which is referred to as the Artificial Intelligence application. The Al-based system is configured to process data, which is a step in managing mobile subscription profiles. The purpose of the Artificial Intelligence application is to analyze the type of a target mobile terminal and to control its operation based on the type identified, either allowing continued operation or taking a countermeasure. This analysis is for ensuring that the mobile subscription profile is managed based on the type of device. The Al-based system performs several actions as part of its data analysis function. It processes data to manage mobile subscription profiles and specifically analyses the type of the target mobile terminal to determine compatibility or necessary actions. The Al-based system permits further operation of the target mobile terminal with the target mobile subscription profile only if the type of the target mobile terminal is a first type, which is defined as a smartphone. If the type of the target mobile terminal is a second type, identified as an Internet-of-Things-device, the Al-based system takes a countermeasure to prevent or mitigate any risks associated with the operation of the device with the mobile subscription profile. The Al-based system uses SQL database queries to perform this analysis. The purpose of using SQL database queries is to enable the Artificial Intelligence application to analyze the type of the target mobile terminal. The input for the SQL query includes data, encoding, loT Device, High End Smart Phone, and Low End Feature Phone. The specific attributes for these inputs are as follows: Encoding: 0 - null, blank, N/A, 1 - value loT Device: IModeGenuine, UserAgent, FormFactor: 000, BrowserName: 0 High End Smart Phone: ChipSet: SD-Gen3, Apple A15 Bionic, RAM > 12 GB, Screen: Amoled, IPS, LTPO, size > 5 inches Low End Feature Phone: RAM 2GB, Screen: TFT, LCD, Monochrome and Size 4 inches These attributes define the specific configurations or states for the loT device and the hardware and display characteristics of high-end and low-end mobile devices. The Al-based system uses these attributes to categorize the target mobile terminal and determine the appropriate action based on its type. In summary, the Data Analysis Unit (502-b) plays a role in the Al-based System by analyzing the type of target mobile terminal using SQL database queries and predefined attributes. This analysis ensures that the mobile subscription profile is managed, allowing continued operation for compatible devices and taking countermeasures for incompatible ones. The detailed attributes and actions associated with this unit highlight its importance in the overall functionality of the Mobile Subscription Profile Management System.

The Operation Authorization Unit, identified as sub-component 502-c, is a part of the Al-based System (component 502) within the Mobile Subscription Profile Management System (system 500). This unit is designed to authorize the operation of the target mobile terminal if it is identified as a first type, which is a smartphone. The Al-based system processes data to manage mobile subscription profiles. It performs an analysis to determine the type of the target mobile terminal. The Al-based system, referred to as the Artificial Intelligence application, is configured to analyze the type of a target mobile terminal which is operated with a target mobile subscription profile. It permits further operation of the target mobile terminal with the target mobile subscription profile only if the type of the target mobile terminal is a first type, and takes a countermeasure if the type of the target mobile terminal is a second type. The first type, as specified, is a smartphone. The attributes of a high-end smartphone include ChipSet: SD-Gen3, Apple A15 Bionic, RAM > 12 GB, and Screen: Amoled, IPS, LTPO, size > 5 inches. These attributes define the high-end hardware and display characteristics of a smartphone, which may influence the management of its mobile subscription profile. The Al-based system uses SQL database queries to analyze the type of the target mobile terminal. The input for the SQL query includes data encoding, loT device configurations, and characteristics of both high-end smartphones and low-end feature phones. The data encoding is specified as 0 - null, blank, N/A, 1- value. The loT device attributes include IModeGenuine, UserAgent, FormFactor: 0 0 0, and BrowserName: 0. These inputs are for the SQL query to analyze the type of the target mobile terminal. The purpose of the Artificial Intelligence application is to analyze the type of a target mobile terminal and to control its operation based on the type identified, either allowing continued operation or taking a countermeasure. The Al-based system permits further operation of the target mobile terminal with the target mobile subscription profile only if the type of the target mobile terminal is a first type, ensuring proper device-profile matching. In summary, the Operation Authorization Unit (502-c) plays a role in the Al-based system by authorizing the operation of smartphones based on their type and characteristics, as analyzed by the Artificial Intelligence application using SQL database queries. This ensures that only compatible devices are allowed to operate with the target mobile subscription profile, maintaining the integrity and security of the mobile subscription management system.

The Countermeasure Unit, identified as system/component number 502-d, is a sub-component of the Al-based System (502) within the Mobile Subscription Profile Management System (500). This unit is designed to take countermeasures if the target mobile terminal is identified as a second type, which is an Internet-of-Things (IoT) device. The Al-based system, also referred to as the Artificial Intelligence application, is configured to process data, analyze the type of the target mobile terminal, and manage mobile subscription profiles accordingly. The Al-based system processes data to manage mobile subscription profiles and performs analysis to determine the type of the target mobile terminal. If the target mobile terminal is identified as a second type, the Countermeasure Unit takes necessary actions to prevent or mitigate risks associated with the operation of loT devices. The Al-based system uses SQL database queries to analyze the type of the target mobile terminal, ensuring identification and appropriate response. The specific attributes and configurations of the loT device are for the Al-based system to perform its analysis. The loT device is defined with attributes such as IModeGenuine, UserAgent, FormFactor: 000, and BrowserName: 0. These configurations are inputs for the SQL query used by the Al-based system to analyze the type of the target mobile terminal. The data encoding method employed in this system standardizes the representation of data states, with encoding values of 0 - null, blank, N/A, and 1- value, facilitating processing and interpretation. The Al-based system's purpose is to analyze the type of a target mobile terminal and control its operation based on the type identified. If the target mobile terminal is a first type, which is a smartphone, the system permits further operation with the target mobile subscription profile. The first type is characterized by high-end hardware and display attributes such as ChipSet: SD-Gen3, Apple A15 Bionic, RAM > 12 GB, and Screen: Amoled, IPS, LTPO, size > 5 inches. Conversely, if the target mobile terminal is a second type, the Countermeasure Unit takes actions to prevent or mitigate risks. The second type, identified as an loT device, is defined by attributes such as IModeGenuine, UserAgent, FormFactor: 0 0 0, and BrowserName: 0. In summary, the Countermeasure Unit (502-d) plays a role in the Al-based System by taking necessary countermeasures when the target mobile terminal is identified as an loT device. This ensures the security and compatibility of the mobile subscription profile management system, leveraging analysis and specific configurations of the target mobile terminals.

The Data Transmission Unit, identified as system/component number 504, is integral to the Mobile Subscription Profile Management System. This unit is responsible for sending data from the loT device, which is for the overall management of mobile subscription profiles. The loT device is configured to send data, and it provides input for SQL queries to facilitate data analysis. The specific attributes of the loT device include IModeGenuine, UserAgent, FormFactor: 000, and BrowserName: 0. These attributes define specific configurations or states for the loT device, which are relevant for the management of mobile subscription profiles. The actions associated with the loT device include sending data for transmitting information for profile management. The loT device provides input for SQL queries to facilitate data analysis. The data encoding method associated with the loT device includes encoding data as 0 - null, blank, N/A, and 1-value. This encoding standardizes the representation of data states, facilitating processing and interpretation. The Data Transmission Unit's role is to ensure that the data sent from the loT device is transmitted and encoded for further processing by the Al-based system. The Al-based system, or Artificial Intelligence application, then analyzes the type of the target mobile terminal to determine compatibility with the mobile subscription profile. This analysis is for managing the mobile subscription profiles. In summary, the Data Transmission Unit (component 504) is for sending data from the loT device, which is then used by the Al-based system to analyze and manage mobile subscription profiles. The specific attributes and actions associated with the loT device, including data encoding and providing input for SQL queries, ensure that the data is transmitted and processed for profile management.

The Data Reception Unit, identified as system/component number 506, is integral to the Mobile Subscription Profile Management System. This unit is responsible for receiving data on both high-end and low-end mobile devices, which is for updating mobile subscription profiles. The entities associated with this component include the high-end mobile device and the low-end mobile device. For the high-end mobile device, the specific attributes include ChipSet: SD-Gen3, Apple A15 Bionic, RAM > 12 GB, and Screen: Amoled, IPS, LTPO, size > 5 inches. These attributes define the high-end hardware and display characteristics of a smartphone, which may influence the management of its mobile subscription profile. The high-end mobile device provides input for the SQL query to facilitate data analysis, ensuring that the data received is processed for profile updates. Similarly, the low-end mobile device is characterized by attributes such as RAM 2GB, Screen: TFT, LCD, Monochrome, and Size 4 inches. These attributes specify the lower-end hardware and display characteristics of a feature phone, which also play a role in the management of its mobile subscription profile. Like the high-end device, the low-end mobile device provides input for the SQL query, contributing to the data analysis process. The actions associated with these devices include receiving the sent data, which is for obtaining information for profile updates. This action is mirrored in the invention, where these devices provide input for the SQL query to facilitate data analysis. The purpose of these inputs is to provide the necessary data for the SQL query to analyze the type of the target mobile terminal. In the context of the Al-based system, which is configured to process data, the Data Reception Unit (component 506) plays a role in receiving data from high-end and low-end mobile devices. This data is then used by the Al-based system to analyze the type of the target mobile terminal, ensuring that the mobile subscription profiles are managed based on the received data.

## Claims

1. A method for managing operation of a mobile terminal operating with a mobile subscription profile hosted in the mobile terminal, in a mobile network, the method comprising: using an Al-based system to analyse a type of the mobile terminal.

2. The method of claim 1, wherein the Al-based system permits further operation of the mobile terminal with the mobile subscription profile only if the subscription profile is dedicated to the type of the mobile terminal.

3. The method of claim 1 or 2, wherein the Al-based system prevents further operation of the mobile terminal with the mobile subscription profile if the subscription profile is not dedicated to the type of the mobile terminal.

4. The method of any of claims 1 to 3, wherein the type of the mobile terminal is either of a high-end mobile terminal, particularly a smartphone, or a mid-end mobile terminal, particularly a low-end feature phone, or a low-end terminal, particularly an Internet-of-Things-device.

5. The method of any of claims 1 to 4, wherein the Al-based system prevents operation of a Smartphone with an Internet-of-Things dedicated subscription profile, or/and prevents operation of a Internet-of-Things device with a Smartphone dedicated subscription profile.

6. The method of claim any of claims 1 to 5, wherein the Al-based system uses SQL database queries to analyse the type of the mobile terminal.

7. The method of claim 7, wherein the SQL database queries are used to analyse the type of the target mobile terminal based on one or several of the following type-specific features:
- a data encoding specific for a type of mobile terminal;
- a Chipset type specific for a type of mobile terminal;
- a working memory, RAM, size range specific for a type of mobile terminal;
- a display type, or/and presence or absence of a display, specific for a type of mobile terminal;
- a browser type specific for a type of mobile terminal.

8. The method of claim 7, wherein the High End Smart Phone is ChipSet: SD-Gen3, Apple A15 Bionic, RAM > 12 GB, Screen: Amoled, IPS, LTPO, size > 5 inches.

9. The method of claim 7, wherein the Low End Feature Phone is RAM 2GB, Screen : TFT, LCD, Monochrome and Size 4 inches.

10. The method of any of claims 1 to 9, further comprising a step of receiving, from the mobile terminal or from the mobile network, at the Al-based system, type-specific information which is indicative of one or several type-specific features of said mobile terminal.

11. The method according to claim 10, wherein the type-specific information received from the bile terminal or from the mobile network comprises or is embodied as a Type Allocation Code, TAC code, comprises in an International Mobile Subscriber Identity, IMSI.

12. The method according to claim 11, further comprising a step of, at the Al-based system, looking up the type-specific features of said mobile terminal corresponding to the Type Allocation Code, TAC code, received from the mobile terminal or from the mobile network in a Type Code Register, TCR, allocated in the mobile network.

13. method of any of claims 1 to 12, wherein a fee billed or charged for operating the mobile terminal with the mobile subscription profile hosted in the mobile terminal is maintained if the subscription profile is dedicated to the type of the mobile terminal, and said fee billed or charged for operating the mobile terminal with the mobile subscription profile hosted in the mobile terminal is amended if a type the mobile terminal has a deviation from a type of mobile terminal to which the subscription is dedicated, according to said deviation.

14. A system for managing operation of a mobile terminal operating with a mobile subscription profile hosted in the mobile terminal, comprising: using an Al-based system to analyse a type of the mobile terminal.

15. A computer readable medium containing code when executed effecting a method according to any of claims 1 to 13.
